Europäisches Patentamt

European Patent Office

Office européen des brevets

(11) Publication number: **0 146 876**
**B1**

(12) EUROPEAN PATENT SPECIFICATION

(45) Date of publication of patent specification: **01.03.89**

(21) Application number: **84115237.4**

(22) Date of filing: **12.12.84**

(51) Int. Cl.⁴: **H 02 M 3/337,**
**H 02 M 7/5387, H 05 G 1/32**

(54) Antisaturation control for x-ray generator inverter.

(30) Priority: **22.12.83 US 564582**

(43) Date of publication of application:
**03.07.85 Bulletin 85/27**

(45) Publication of the grant of the patent:
**01.03.89 Bulletin 89/09**

(84) Designated Contracting States:
**DE FR GB NL**

(56) References cited:
**FR-A-2 375 749**
**GB-A-2 072 964**
**US-A-4 150 424**
**US-A-4 270 164**

(73) Proprietor: **GENERAL ELECTRIC COMPANY**
**1 River Road**
**Schenectady New York 12305 (US)**

(72) Inventor: **Santurtun, Carlos Manueco**
**Felipe Alfaro, 2**
**Pozuelo de Alcorcon Madrid (ES)**
Inventor: **Carmena, Angel Diaz**
**c/o Ingeniero Tecnico Industrial**
**Plaza Mayor No. 9-1-D Alcorcon Madrid (ES)**

(74) Representative: **Schüler, Horst, Dr. et al**
**Kaiserstrasse 69**
**D-6000 Frankfurt/Main 1 (DE)**

Courier Press, Leamington Spa, England.

# Description

This invention relates to a control system for preventing saturation of an inductive load in a power control system.

It is common in the generation and use of X-rays to select a particular voltage and current level to fit the particular application or procedure at hand. For example, in the field of medical X-ray imaging, a typical voltage level that may be applied in conventional radiography might be in the range of 50 kV to 150 kV, whereas in a fluorographic application the voltage is more likely to be in the 50 kV to 120 kV range, and for use in mammographic X-ray applications it is more likely to be in the range between 24 kV and 50 kV. Similarly, the level of current which is applied may vary from 0.1 mA for fluorographic applications to 1250 mA for certain radiographic procedures. Traditionally, these voltage and current levels have been controlled by the use of circuit design features which allow the operator to preset the desired kVp and mA settings that were desired. Because of system variations which can occur during an exposure, such as, for example, a change in the load, a change in the line voltage, or a change in the filament temperature, it has been impossible to precisely maintain the kVp and mA values at the preferred levels. The manufacturers of X-ray generators have traditionally tried to anticipate the changes that may occur and to incorporate circuit design features which would compensate for those variations in a manner sufficient to hold the kVp and mA within predetermined tolerances.

Recent developments have occurred along the lines of a closed-loop feedback system which would overcome the disadvantages of the open-loop system discussed above. One such system is that for a closed-loop feedback system to control mA in an X-ray generator system.

In the area of kVp control, there has been no development of a satisfactory closed-loop system which senses the output voltage and uses that feedback signal to directly modulate the output voltage in a quick, effective, and responsive manner to maintain a predetermined voltage level.

The conventional approach for maintaining a substantially constant voltage level with the variations that may occur in the line is to use the so-called volt-pac which is a variable input/output transformer driven by a motor to obtain a variable output. A primary disadvantage of the volt-pac is that it is relatively slow in operation, i.e., the volt-pac has a response time of about 1 second. For this reason, the volt-pac control is used only to set up the correct voltages at the start of exposure and is not thereafter adjusted except during long (i.e., fluoroscopic) exposures. This is to be compared with a desired response time in the millisecond range for an X-ray generator system which is able to provide a short power pulse of good definition for a large variety of procedures and applications. For example, it is desirable to have a high-voltage pulse with a very quick rise time, i.e., as short as 1 millisecond, a flat peak for an exposure as short as 1 millisecond, and a quick fall time. Hence, corrections need to be accomplished in less than one millisecond.

The use of an inverter in an X-ray generator circuit to provide an alternating current to the primary of a high-voltage transformer is known. However, due primarily to the fact that they are relatively difficult to control, transistors have generally not been used for this purpose. Rather, it has been the thyristor which has been used for the switching device in these applications. Although thyristors are considered to be generally rugged and relatively easy to control, they have the inherent disadvantage of requiring the use of forced commutating circuitry. Thus, not only is there a need for extra components, but also, the added capacitance tends to substantially slow down the response time of the circuit. For example, when using a thyristor inverter, it would be difficult to obtain a short, high-voltage pulse in the range of 1 msec. duration while at the same time maintaining a reasonable level of reproducibility.

For the control of the a.c. output from an inverter, there are a number of possible techniques for controlling the d.c. voltage supply to the inverter: phase-controlled rectifiers, transistor series or shunt regulators; and semi-conductor switching-type d.c. voltage controls, to name a few. Of these, the semi-conductor switching device commonly known as the chopper can generally provide more efficient and faster response d.c. voltage controls than the other techniques. However, because of the substantial filtering requirement in the d.c. circuit, it is much too slow in response time for operation in a complete closed-loop voltage regulated inverter power supply. With such an indirect approach, there are further circuit losses that are caused by the forced commutation circuitry that must be used to accommodate the large voltage and current variations that are necessary in the operation of an X-ray generation system. Moreover, with such an arrangement, it will be recognized that the power delivered by the inverter is handled twice, once by the d.c. voltage control and once by the inverter.

In addition to the inherent variations that occur in the source and in the load, there are also certain, occasional, unplanned conditions, such as an arc in the tube, which occur on the high voltage side which, if not controlled, may lead to harm to the components. Further, in any control network, there is a possibility of malfunction or failure in the low voltage control circuitry which, if not detected and attended to, may cause undesirable consequences at the output or within the control network itself. Thus, with any control or performance-enhancing features that may be added to a conventional system, there are related monitoring and regulating features which must be provided to accommodate these enhancements. Accordingly, in the field of X-ray generators for use in medical diagnostic equipment, there has been a reluctance to introduce any significant change to conventional systems.

Although it has long been the desire of X-ray-generation manufacturers to provide a closed-loop voltage feedback system, the typical requirements for X-ray applications (i.e., variable loads in the range of .1—1250 mA, variable voltages in the range of 24—150 kVp, and mAs as low as .25), a suitable such system has been difficult to make. The task is made more difficult by the various performance requirements such as good ripple control, high reproducibility, good linearity, and a controlled shape of the power waveform with a fast rise time, a steady-state, short exposure time, and a short fall time.

A well-known phenomenon that occurs in transformers is that of a saturation of the core which can occur when there is a difference in the voltage between the positive and the negative cycles. Such an imbalance can lead to a cumulative effect of saturation at the end of several cycles wherein a large current will be produced to collapse the transformer output or at least render it insensitive to adequate control. The difficulty of sensing such a condition and taking necessary action to correct it increases with an increase in frequency and, therefore, poses a significant problem in a transformer used with a high-frequency inverter. For example, in a transformer used with a pulse-width-modulated inverter working at high frequency, the storage time of the switching devices must be taken into account and a difference of a few microseconds can cause a significant difference in the flux density between one cycle of the transformer and the next, such that the transformer can very easily and quickly get into a saturation condition before it can be sensed and corrected.

The conventional methods of compensating for saturation in transformers is to either increase the air gap in the transformer or to design the transformer for a very high flux density and operate at a lower flux density. The latter solution is not desirable because of the obvious inefficiency and because of the related need to increase the size of the transformer core and, therefore, increasing both the size and cost of the system. Similarly, if the air gap is increased, there is an associated need for a larger current in the winding for the magnetization of the core. This will, of course, detract from the effective current in the transformer and will, therefore, decrease the efficiency.

Further GB—A—2 072 964 describes an antisaturation control circuit having a current sensor connected in series with the transformer. This, however, is no satisfactory method since monitoring of the current through the transformer primary winding alone provides erroneous results.

US—A—4 150 424 describes a current balance arrangement for the power switching devices of a push-pull converter circuit, wherein a dynamic deadband circuit is incorporated into a pulse width modulation current balance and output voltage regulation control circuit to prevent current imbalance from causing saturation of the power transformer core.

It is, therefore, a primary object of the present invention to provide an improved power control system with means for controlling the output voltage to be applied to an inductive load by way of a closed-loop circuit.

Another object of the present invention is the provision in a power control system for a closed-loop voltage feedback loop which is effective for rapidly and accurately responding to fluctuations in the input voltage in the load so as to maintain the desired voltage output.

Yet another object of the present invention is the provision in a power control system for a control network which is sufficiently fast and responsive over a wide range of operating conditions to provide a generated power pulse having a rapid rise time followed by a relatively short exposure time of substantially constant voltage, and a relatively fast fall time.

Still another object of the present invention is the provision in a power control system for controlling the saturation of the transformer core in an efficient and effective way.

These objects and other features and advantages will become more readily apparent upon reference to the following description when taken in conjunction with the appended drawings.

Briefly, in accordance with one aspect of the invention as claimed in claim 1, a power control system is provided with a high-voltage feedback from the tube, and a control network which is responsive to that feedback to control the operation of the system inverter in such a way as to maintain a predetermined voltage level to the X-ray tube. In this way, the feedback signal is applied to directly control the output of the inverter so that the system can quickly and accurately respond to variations in both the line voltage and the load. The cooperating components, such as the high-voltage transformer, high-voltage output filter, and high-voltage bleeder circuitry, are designed to be compatible with, and contribute to, the quick response features of the system. The resulting control network provides a system which is capable of providing to the inductive load a high voltage output which has: a rise time as short as one millisecond; a steady-state, high-voltage period as short as one millisecond with minimal ripple; and a fast fall time, particularly for very low mAs such as 0.25 mAs.

By another aspect of the invention, a transistor inverter operating at relatively high frequencies (i.e., in the range of several kilohertz) is adapted to provide a square wave, pulse-width-modulated output whose rectified output voltage level is controlled by selectively varying, not only the mark/space ratio, but also the frequency of the output waveform. The inverter is controlled in response to: operator settings; the output voltage feedback; and to generated signals representative of certain operating conditions of the system.

Another aspect of the invention relates to the sensing of a saturating condition in the transformer core and for responsively initiating corrective action to alleviate the problem. Means are provided to sense the current in the transformer and to integrate the resulting signal to obtain an indication of an approaching core-saturation condition. The signal is then applied to a sawtooth generator to generate control signals which act to selectively unbalance the current flow in the two diagonals in such a way as to alleviate the saturating condition.

In the voltage feedback loop, a phase-advance network is included to dynamically vary the gain of the system in such a way as to provide for a high gain during the initial stage so as to obtain a short rise time, while subsequently reducing the gain so as to clamp the kV overshoot at the end of the rise time. This effect is provided by applying the voltage feedback signal to a phase-advance circuit prior to its being applied to the voltage demand signal at the input to an amplifier. The attendant noise that is introduced by the phase-advance network is alleviated by a phase-lag network which is provided in the feedback loop of the amplifier.

A high-voltage divider circuit is provided to obtain a low-voltage control signal representative of the output voltage for use in the control network. Instead of adding a separate capacitor for the high-voltage portion of the divider, the filter capacitor is used for that purpose and, as such, is useful in a dual-purpose mode. This leads to a substantial reduction in the number of components and, when used with the present high-frequency pulse-width-modulated output, provides a closed-loop voltage-feedback system with good transient response.

In order to protect the system from undesirable conditions which may result from possible malfunctions, voltage spikes, flash-overs, and the like, a microprocessor is incorporated to monitor the system and, on the basis of status signals which it receives, to modulate the system operation and/or shut down the system accordingly. Some of the specific conditions against which the protection system acts to reduce, prevent, or stop the system operation are: over-voltage at the output, unbalance between the anode and the cathode with respect to ground, excessive current flow, and excess of kilovolt uncontrolled demand. Provision is also made to begin timing of X-ray exposures only after the output voltage level has reached 75% of the demand or equipment set point, thereby ensuring improved performance, and meeting prescribed regulations.

In the drawings as hereinafter described, the preferred embodiment is depicted; however, various other modifications and alternate constructions can be made thereto without departing from the true spirit and scope of the invention.

Figure 1 is a schematic illustration of a power control system in accordance with the present invention;

Figures 2a and 2b are schematic illustrations of the voltage feedback and control portion of the present invention in accordance with the preferred embodiment;

Figure 3 is a schematic illustration of the antisaturation circuit portion of the present invention;

Figures 4a and 4b show representative pulses that are generated in the control of the inverter of the present invention.

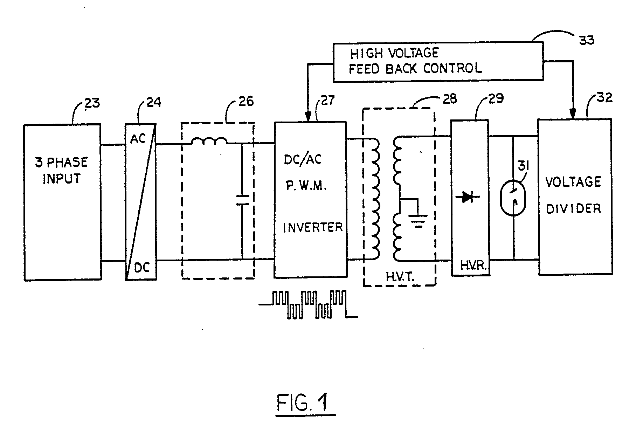

The X-ray generator system of the present invention is shown in Fig. 1 to comprise a three-phase power source 23, an a.c. to d.c. three-phase non-controlled rectifier 24, an LC filter 26, and a d.c. to a.c. pulse-width modulator inverter 27 operating at variable high-frequency conditions.,i.e., in the range of several kilohertz. The output of the inverter 27 is controlled by way of pulse-width modulation with provisions for varying both the mark-space ratio and the frequency by way of a kVp feedback controller, as will be described more fully hereinafter. The output from the PWM inverter 27 passes to a high-tension transformer 28, through a single-phase rectifier 29 and is finally applied to an X-ray tube 31. The tube 31, which operates at voltage levels up to 150 kV, presents a load of anywhere from .1 mA to 1250 mA, depending on the particular application and procedure, and must be capable of providing a wide range of exposure times from 1 msec. to several seconds in order to accommodate the various radiographic applications. The present invention provides for such a wide range of operating conditions and performance parameters by controlling the X-ray output in a fast and accurate manner, as will be described in more detail hereafter. It will be seen by reference to the Fig. 1 that a primary feature of this fast response system is the closed-loop feedback control which senses, by way of the voltage divider 32, the voltage across the X-ray tube 31 and provides a representative signal to the high-voltage feedback control 33, which in turn provides a control signal to the PWM inverter 27.

It should be mentioned here that, while the power source is described as a three-phase input, it may as well be a single-phase input. Since the system of the present invention is designed to operate at frequencies which are substantially higher than those of a conventional generator, the complications of wave-form ripple are substantially reduced. For this reason, where single-phase operation is not practical in a conventional X-ray generator, it is practical when used with the accommodating features of the present invention.

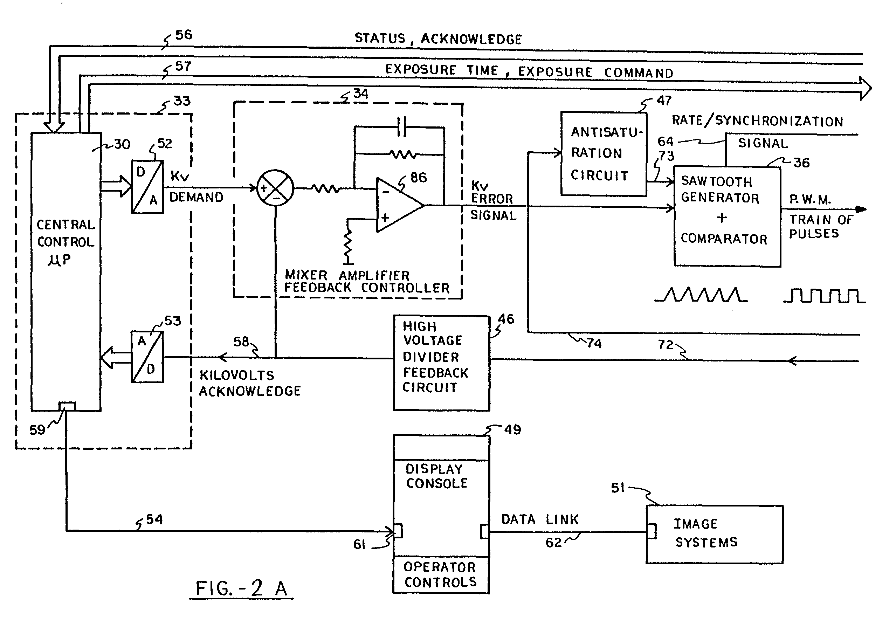

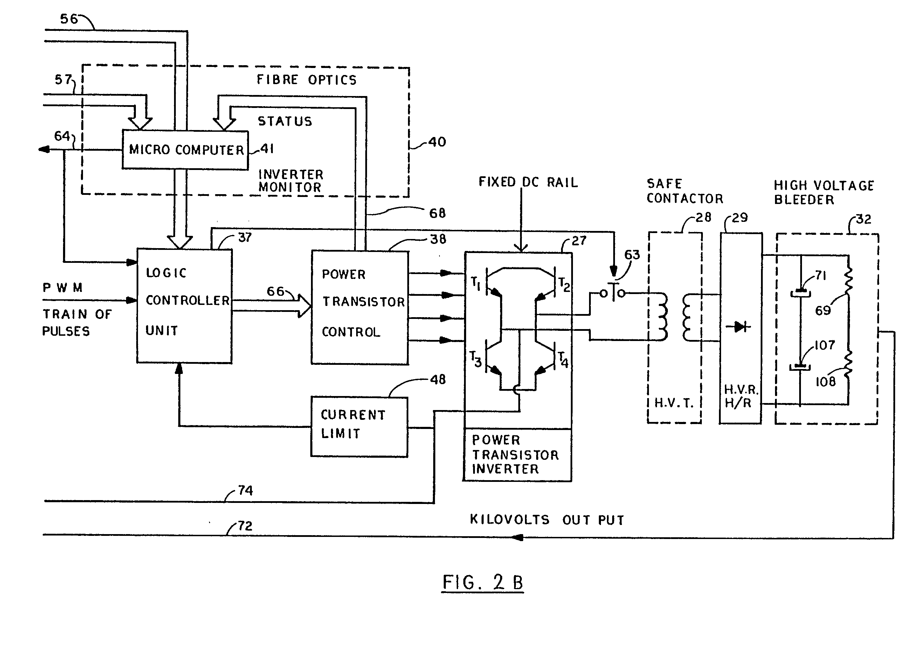

The square-wave pulse-width-modulated inverter and control system of the present invention is shown schematically in Figs. 2A and 2B as comprising the following elements: a Central Control Microprocessor Kilovolts Demand Control 33, employing a microprocessor 30; a Mixer Amplifier and Feedback Controller 34; a Sawtooth Generator and Comparator 36; a Logic Controller Unit 37; Power Transistor Controllers 38; the square-wave pulse-width modulated transistor inverter 27; an Inverter Monitor 40 with its dedicated microcomputer 41 which controls the interlock for safety signals from the power transistor inverter 27 back to the Logic Controller Unit 37; the high voltage transformer 28; the high voltage rectifier 29; the High Voltage Bleeder 32; a High Voltage Divider Feedback Circuitry 46; an Antisaturation Circuit 47 which works with the error signal and the Sawtooth Generator and Comparator 36; a Current Limit Circuit 48; a Display Console and operator controls 49, with its installed microprocessors; and an Imaging Device 51, which may be of the conventional type. The overall system as shown in Fig. 2 will now be described in general terms, and the individual components will be described in more detail hereinafter.

The overall control system is coordinated by the microcomputer 41 and control microprocessor 30, the inverter microcomputer 41 being dedicated to continuously monitor and check the high voltage power transistor inverter 27 and the central control microprocessor 30 acting to control the demand prior to and during exposure. The control microprocessor 30 also reads the kilovolts coming from the feedback to provide, during exposure, an accurate control of what is happening on the high voltage side. Any of a number of commercially available microprocessors and/or microcomputers may be used with the present invention. For example, the Intel 8085 microprocessor may be used for the central control function, whereas the Intel 8749 microcomputer may be employed for monitoring the inverter operation.

The central microprocessor 30, in response to signals from the Display Console 49, generates the Kilovolts Demand and passes that signal, by way of the D/A converter 52, to the Mixer Amplifier and Feedback Controller 34. The Kilovolts Acknowledge signal comes to the central microprocessor 30 by way of the A/D converter 53. The Kilovolts Demand and Kilovolts Acknowledge signals should be maintained very close together and, in addition to being monitored by the central microprocessor 30 for that purpose, are also used as inputs for protection if, on the high voltage side, an arcing occurs or a component is damaged. In such case, the Kilovolts Demand signal will not be followed by the Kilovolts Acknowledge signal and the central microprocessor 30 will, therefore, shut down the system.

The central microprocessor 30 is connected to Display Console 49 by a data link 54, to the inverter microcomputer 41 by lines 56 and 57 and to the High Voltage Feedback Circuits 46 by line 58. The data handling and communication starts at the Console 49 where the operator enters the exposure times and other parameters. Those parameters are analyzed and controlled by the system microprocessor, such as an Intel 8088 microprocessor, in conjunction with an arithmetic co-processor, such as an Intel 8087, which handles all of the arithmetical calculations for X-ray protection and exposure parameters. Communication between the Console 49 and the cabinet 33, or between the 8088 and 8085 microprocessors, is made along the data link 54 by the two data link protocol controllers 59 and 61 which, in one embodiment, are Intel 8273 chips. These controllers guarantee a very high reliability in the data transmission in a bidirectional way with cyclic redundancy checkword, NRZI protection systems. The Console 49 has the further capability of serving another data link 62 to the Image Systems 51 so that the communication is completely digital to provide high reliability during its operation.

The communication between the central microcomputer 30 on the cabinet side and the inverter microcomputer 41 is also done in a bidirectional way by lines 56 and 57. Hence, the operator control state is such that kilovolts and exposure time are being provided to the central control microprocessor 30 and from there to the inverter microcomputer 41, which controls the output voltage during exposure, the inverter operation, and the exposure time, such that, during the X-ray exposure, there are three microprocessors controlling exposure time, (i.e., the central control microprocessors 30 and inverter microcomputer 41 on the cabinet side and, as a backup, the Display Console microprocessor 8088 on the console side. Such a combination provides redundant protection against an excessive dose of radiation during exposure.

One advantage of using the closed-loop feedback and the Kilovolts Demand and Kilovolts Acknowledge signals as shown is that in long-term exposures, such as in fluoro operation, should any deviation occur in the high tension feedback or in some of the associated electronic components, the closed-loop feedback will compensate for that automatically. Further, the communication on lines 56 and 57 between the inverter microcomputer 41 and the microprocessor 30 on the cabinet side is done directly by means of the central control microprocessor 30 sending kilovolts and exposure-start and exposure-time commands to the microcomputer 41, while the microcomputer 41 is continuously monitoring the output state and sending a status and acknowledge signal back to the central microprocessor 30. This provides a very simple communication link where, on several redundant levels, it is possible to detect any problem which might occur in the power circuitry to stop the high power inverter in a few microseconds, or to open the safety contactor 63, if it should become necessary.

The Mixer Amplifier and Feedback Controller 34 produces a narrow signal which is the difference between the Kilovolts Demand and the Kilovolts Acknowledge or feedback. The resulting kV error signal is amplified and processed with phase advance and phase lag circuits, to be described more fully hereinafter, to make the system stable. The kV Error signal is then fed, along with a signal from the Antisaturation Circuit 47, to the Sawtooth Generator and Comparator 36. The signal from the Antisaturation Circuit 47 controls the slope of the sawtooth generator so as to prevent the high voltage transformer 28 from reaching a condition of saturation, as will be more fully described hereinafter. The kV Error Signal feeds the Sawtooth Generator and Comparator 36 to produce a PWM train of pulses with a variable mark/space ratio, which in turn is applied to control the output voltage and to adjust it automatically through the closed-loop kilovolt feedback operation. The Sawtooth Generator and Comparator 36 and Logic Controller Unit 37 are controlled by a reset or synchronization signal received every half cycle along line 64 from the dedicated microprocessor 41 to guarantee that the kV Error Signal from the mixer 34 will intersect the sawtooth generator waveform once per half cycle to thereby avoid the possibility of having several intersections which might lead to problems at the power stage circuit.

The Logic Controller Unit 37, which handles all of the system protections and timing, has, by way of fibre-optic line 66, an output which controls the power transistor inverter 27 through the Power Transistor Controllers 38. This Logic Controller Unit 37 also handles the Current Limit 48 output. The Current Limit Circuit 48 is responsive to the inverter current level, detected with a current transformer 67 in series with the primary of the high voltage transformer 28. The sensed current level is compared, in the Current Limit Circuit 48, with a predetermined safe level, and the output of the Current Limit Circuitry 48 is applied to the Logic Controller Unit 37 to cut off the mark/space pulses dynamically if a circuit overload condition occurs. The output from the current transformer 67 is also fed back into the Antisaturation Circuit 47, and its output, in turn, is applied to the sawtooth generator along line 74 to vary the slope dynamically to electronically compensate for saturations in the transformer.

In addition to providing signals to directly control the power transistor inverter 27, the Power Transistor Controller 38, also provides, along line 68, signals indicative of the power supply status on the controllers and of the transistor's status, back to the inverter microcomputer 41 which uses that information to control the Logic Controller Unit 37 such that, should any transistor or power supply fail, the information coming from the Transistor Controller 38 will be fed back, in real-time, into the Logic Controller Unit 37 which will, first of all, stop the inverter and, secondly, will open the appropriate safety contactor(s) 63.

The pulse-width-modulated inverter 27 is comprised of a plurality of transistors shown generally in Fig. 2 as $T_1$—$T_4$, arranged in a full bridge disposition so as to provide alternate conduction through the transformer primary 28 by way of diagonals $T_1$—$T_4$ and $T_2$—$T_3$. The transistors may be used as shown or, alternately, may be used in parallel where the power requirements may require it. One type of transistor that has been found to be useful in the present invention is that identified by the designation WT-5752, which is commercially available from Westinghouse Brake (Westcode) in Chippenham, England. The pulse-width modulation is affected by the selective turning on and off of the top transistors $T_1$ and $T_2$ only.

The high voltage transformer 28 is described in EP—84 114 921.4.

Suffice it to say, the transformer 28 is designed to have a very low leakage inductance so that the square waveform produced in the PWM inverter is pulsed to the secondary of the transformer with very good waveform reproduction. In this way, the drop between pulses, is minimized and the ripple, after rectification, is kept to a minimum so as to thereby limit the size of the output filter. This, in turn, facilitates a high reproducibility operation at lower mAs settings. The rectifier 29 is of the conventional single-phase type.

The High Voltage Divider or High Voltage Bleeder 32 is designed to include unique resistive and capacitive electronic circuitry, shown generally as 69, 71, 107, and 108, to improve the response of the transformer 28 to the dynamic variations of the load or source, or to other transient conditions, such that the rise and the fall times are minimized. The output from the High Voltage Bleeder 32 is the Kilovolts Output which feeds, along line 72, to the High Voltage Divider Feedback Circuits 46 in a step-down voltage fashion. That is, since the output from the bleeder 32 is a higher voltage than can be directly applied to the control circuits, there is a need for the voltage to be stepped down in several steps, with different arresters and overvoltage protection methods, to avoid the transmission of high voltage transients from the high tension area, which could damage the control circuits. This circuitry will be described more fully hereinafter.

The operation of the closed-loop kV feedback system is primarily dependent on the Mixer Amplifier and Feedback Controller 34, which produces an error signal equal to the difference between the Kilovolts Demand and the Kilovolts Output. It is necessary for the Controller 34 to (1) be conditioned to the electronic circuitry level through the high voltage divider feedback circuits so that the error signal generates a mark/space train of pulses with the specific ratio depending on the kilovolts' demand, and (2) compensate for the three main variables which may disturb the system operation during exposure, the variables being (a) the fixed d.c. rail which will vary with the lines and the line regulation; (b) the variations occurring in the X-ray tube impedance particularly in long-term exposures where the electron cooling phenomena occurs; and (c) the variation on the offsets that the electronic circuitries themselves will provide to the overall system.

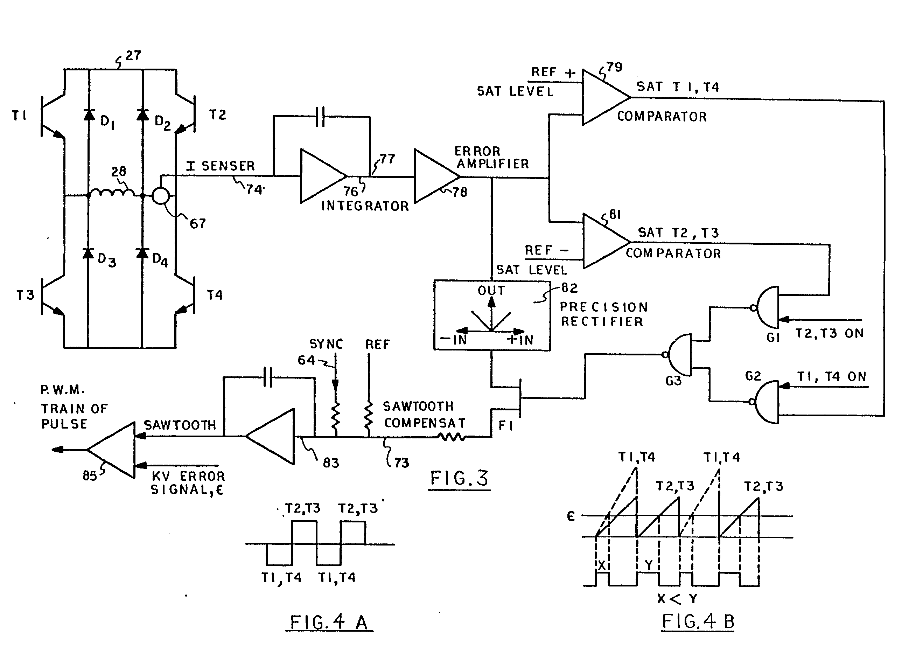

Referring now to Fig. 3, there is shown a schematic illustration of the combination of the Antisaturation Circuit 47 (Fig. 2) and the Sawtooth Generator and Comparator 36 in combination. As is shown in Fig. 2, the Sawtooth Generator and Comparator 36 is responsive to three signals: (1) the synchronization signal which comes in on line 64 to reset the sawtooth range every half cycle; (2) the control signal which is fed, on line 73, directly to the Sawtooth Generator 36 from the Antisaturation Circuit 47; and (3) the Kilovolts Error Signal E from Mixer Amplifier 34. The Antisaturation Circuit 47 is responsive to the current output of the inverter as received along line 74.

Referring now back to Fig. 3, the inverter is shown to include transistors $T_1$—$T_4$ with associated flywheel diodes $D_1$—$D_4$. The current in the inverter or primary of the transformer 28 is sensed by current transformer 67 and is passed on line 74 to an integrator 76 whose output in turn passes on line 77 to an error amplifier 78 whose output is applied to two comparators 79 and 81. These comparators have respective positive and negative reference levels which normally are of very low value, i.e., nearly zero, and fix what is called the admissible saturation level in the transformer. It will be seen that the respective outputs from the comparators 79 and 81 are applied to NAND Gates G1 and G2, whose outputs are applied to NAND Gate G3. The output from NAND Gate G3 acts to close an FET switch F1 on either one diagonal $T_1$, $T_4$ or other $T_2$, $T_3$ in the power inverter. A closing of the FET switch F1 will allow the Error Amplifier output signal, which is proportional to the current sensed, to feed a precision rectifier 82 working in the first and fourth gradients which in turn feeds a linear output through the FET switch F1, to the sawtooth generator or compensator. The sawtooth generator is an integrator 83 which is preset by the synchronization signal from line 64 and produces a sawtooth whose slope is set for a zero saturation level constant as shown in Figs. 4A and 4B and defined by the range of a part of the overall closed-loop feedback system. The sawtooth waveform signal is then applied, along with the kV Error Signal E, to a comparator 85 which responsively generates a PWM train of pulses that controls the inverter.

Should any saturation start to occur, for example, in the diagonal $T_1$, $T_4$ direction, the error amplifier 78 will produce a d.c. level input to the precision rectifier 82 whose output will be linearly proportional to the input. It will be recognized that the precision rectifier 82 is responsive to either positive or negative d.c. volts input from the error amplifier 78, with the sign being dependent on the applicable current direction in the power transistor inverter. Consequently, the magnitude of the particular d.c. saturation level determines the output of the precision rectifier 82, and that output in turn is passed through FET switch F1, if the saturation level reaches above the preset reference levels to correct for the condition. As the saturation occurs, for example, in the diagonal $T_1$, $T_4$, the sawtooth generator will increase the slope on that part of the waveform when the $T_1$, $T_4$ diagonal is conducting, and, as will be seen in Fig. 4B, this increasing of the slope will lead to a decreasing in the mark/space ratio for a given error signal from the feedback, which in alternate cycles will decrease the mark/space ratio on that diagonal and will compensate dynamically for the difference in, say, hysteresis time in the transistors or unbalancements due to local saturations in the core.

Referring back to Fig. 3, in such a saturation condition, the output from the error amplifier will overcome the positive reference value on comparator 79 which in turn will send a command logic signal to NAND Gate G2 to synchronize with the on-time for the $T_1$, $T_4$ diagonal so that, when the $T_1$, $T_4$ diagonal of transistors is turned on, the waveform of the sawtooth generator is automatically increased in slope and the mark/space ratio is diminished. In this way, the saturation level is dynamically and electronically compensated for by way of a closed-loop proportional control, i.e., the mark interval X is reduced and the interval Y is increased.

The advantage of this electronic dynamics FET compensation is that it operates continuously once the current level on the dc transformer 67 exceeds a preset reference saturation level, and in a proportionally controlled way, compensates by a suitable reduction in the mark/space ratio, when an inverter diagonal moves toward saturation.

While this invention has been described with reference to particular embodiments and examples, other modifications and variations will occur to those skilled in the art in view of the above teachings. Accordingly, it should be understood that within the scope of the appended claims the invention may be practiced otherwise than is specifically described.

**Claims**

1. A control system for preventing saturation of an inductive load in a power control system including an inverter (27) for supplying power to an inductive load (28) and pulse means (85) for providing variable pulse width gating signals to the inverter, the inverter (27) being of the type including first and second switching means ($T_1$, $T_3$) serially connected between a positive and a negative voltage bus, third and fourth switching means ($T_2$, $T_4$) serially connected between the positive and the negative voltage buses, the inductive load (28) being connected between a junction intermediate the first and second switching means and a junction intermediate the third and fourth switching means, first and second diodes ($D_1$, $D_3$) serially connected between the positive and the negative voltage buses and poled to conduct current from the negative bus to the positive bus, third and fourth diodes ($D_2$, $D_4$) serially connected between the positive and the negative voltage buses and poled to conduct current from the negative bus to the positive bus, the inductive load being connected between a junction intermediate the first and second diodes and a junction intermediate the third and fourth diodes, a current sensor (67) being connected to sense current through the load and the switching means and to provide a signal representative thereof, the sensor being connected such that current through the diodes is not sensed;

means (76, 78) for integrating the current in a first direction through the load when the first and fourth switching means ($T_1$, $T_4$) are conducting and the current through the load in a second direction when the second and third switching means ($T_2$, $T_3$) are conducting, said integrating means providing an error signal having a polarity and value representative of a difference therebetween;

means (79, 81) for comparing said error signal to a reference signal having a predetermined value and for providing a gating signal when the value of said error signal is greater than the value of said reference signal; and

logical means ($G_1$ to $G_3$) responsive to said gating signal for selectively applying said error signal to said pulse means (85) to vary the pulse gating signals to the inverter whereby the conduction time of the pair of switching means creating the saturating current is reduced to thereby reduce the value of the error signal.

2. The control system of claim 1, characterized in that said error signal comparing means comprises:

a first comparator (79) connected for comparing said error signal to a positive value reference signal and for generating said gating signal when said error signal is more positive than said reference signal; and

a second comparator (81) connected for comparing said error signal to a negative valued reference signal, said second comparator providing said gating signal when said error signal is more negative than said reference signal.

3. The control system of claim 2, characterized in that said gating signal responsive means comprises:

a first logic circuit ($G_2$) having a first input terminal connected for receiving said gating signal from said first comparator (79) and a second input terminal connected for receiving a signal indicative of conduction of the first and fourth switching means, said first logic circuit providing a first saturation signal in response to coincidence of said gating signal and said conduction indicative signal;

a second logic circuit ($G_1$) having a first input terminal connected for receiving said gating signal from said second comparator (81) and a second input terminal connected for receiving a signal indicative of conduction of the second and third switching means, said second logic circuit providing a second saturation signal in response to coincidence of said gating signal and said conduction indicative signal; and

third logic means ($G_3$) responsive to the presence of at least one of the first and second saturation signals for generating a logic signal to enable coupling of said error signal to said pulse means.

4. The control system of claim 3, characterized in that the pulse width of said pulse signals for the inverter is determined by comparing an output voltage difference signal representative of the difference between the voltage developed by the system and the adhered voltage to a ramp voltage signal which is reset at the beginning of each pulse signal, the slope of the ramp voltage signal only during the conduction time of the switching means contributing to said error signal whereby the pulse width of said pulse signals are reduced for said conducting switching means.

**Patentansprüche**

1. Regeleinrichtung zum Verhindern einer Sättigung einer induktiven Last in einer Leistungsregeleinrichtung enthaltend einen Wechselrichter (27) zur Lieferung von Leistung an eine induktive Last (28) und Pulsmittel (85) zur Lieferung pulsbreitengesteuerter Steuersignale an den Wechselrichter (27), der erste und zweite Schaltmittel ($T_1$, $T_3$), die zwischen einem positiven und einem negativen Samelleiter in Reihe geschaltet sind, und dritte und vierte Schaltmittel ($T_2$, $T_4$) aufweist, die zwischen den positiven und negativen Sammelleitern in Reihe geschaltet sind, wobei die induktive Last (28) zwischen einen Knotenpunkt zwischen den ersten und zweiten Schaltmitteln und einen Knotenpunkt zwischen den dritten und vierten Schaltmitteln geschaltet ist, erste und zweite Dioden ($D_1$, $D_3$), die zwischen den positiven und negativen Sammelleitungen in Reihe geschaltet und so gepolt sind, daß sie Strom von der negativen zur positiven Sammelleitung leiten, dritte und vierte Dioden ($D_2$, $D_4$), die zwischen den positiven und negativen Sammelleitungen in Reihe geschaltet und so gepolt sind, daß sie Strom von der negativen zur positiven Sammelleitung leiten, wobei die induktive Last zwischen einen Knotenpunkt zwischen den ersten und zweiten Dioden und einen Knotenpunkt zwischen den dritten und vierten Dioden geschaltet ist, einen Stromsensor (67), der so geschaltet ist, daß er den Strom durch die Last und die Schaltmittel abtastet und ein entsprechendes Signal liefert, wobei der Sensor so geschaltet ist, daß der Strom durch die Dioden nicht abgetastet wird, Mittel (76, 78) zum Integrieren des Stromes in einer ersten Richtung durch die Last, wenn die ersten und vierten Schaltmittel ($T_1$, $T_4$) durchgeschaltet sind, und den Strom durch die Last in einer zweiten Richtung, wenn die zweiten und dritten Schaltmittel ($T_2$, $T_3$) durchgeschaltet sind, wobei die Integriermittel ein Fehlersignal mit einer Polarität und einem Wert liefern, die eine dazwischen bestehende Differenz darstellen, Mittel (79, 81) zum Vergleichen des Fehlersignals mit einem einen vorbestimmten Wert aufweisenden Referenzsignal und zum Liefern eines Ansteuersignals, wenn der Wert des Fehlersignals größer als der Wert des Referenzsignals ist, und Logikmittel ($G_1$ bis $G_3$), die auf das Ansteuersignal ansprechen, zum selektiven Zuführen des Fehlersignals zu den Pulsmitteln (85) zum Verändern der Pulssteuersignale an den Wechselrichter, wodurch die Durchschaltzeit der zwei Schaltmittel, die den Sättigungsstrom hervorruft, verkürzt ist, um dadurch den Wert des Fehlersignals zu verkleinern.

2. Regeleinrichtung nach Anspruch 1, dadurch gekennzeichnet, daß die das Fehlersignal vergleichenden Mittel aufweisen:

einen ersten Komparator (79) zum Vergleichen des Fehlersignals mit einem positiven Referenzsignal und zum Generieren des Ansteuersignals, wenn das Fehlersignal positiver als das Referenzsignal ist, und einen zweiten Komparator (81) zum Vergleichen des Fehlersignals mit einem negativen Referenzsignal, wobei der zweite Komparator das Ansteuersignal liefert, wenn das Fehlersignal negativer als das Referenzsignal ist.

3. Regeleinrichtung nach Anspruch 2, dadurch gekennzeichnet, daß die auf das Ansteuersignal ansprechenden Mittel aufweisen:

eine erste Logikschaltung ($G_2$) mit einem ersten Eingangsanschluß, der zum Empfang des Ansteuersignals von dem ersten Komparator (79) geschaltet ist, und einem zweiten Eingangsanschluß, der zum Empfang eines Signals geschaltet ist, das die Durchschaltung der ersten und vierten Schaltmittel anzeigt, wobei die erste Logikschaltung ein erstes Sättigungssignal bei einer Koinzidenz des Ansteuersignals und des die Durchschaltung anzeigenden Signals liefert,

eine zweite Logikschaltung ($G_1$) mit einem ersten Eingangsanschluß, der zum Empfang des Ansteuersignals von dem zweiten Komparator (81) geschaltet ist, und einem zweiten Eingangsanschluß, der zum Empfang eines Signals geschaltet ist, das eine Durchschaltung der zweiten und dritten Schaltmittel anzeigt, wobei die zweite Logikschaltung ein zweites Sättigungssignal bei einer Koinzidenz des Ansteuersignals und dem die Durchschaltung anzeigenden Signal liefert, und

dritte Logikmittel ($G_3$), die auf das Anlegen wenigstens eines der ersten und zweiten Sättigungssignale ansprechen zum Generieren eines Logiksignals, das eine Zufuhr des Fehlersignals zu den Pulsmitteln freigibt.

4. Regeleinrichtung nach Anspruch 3, dadurch gekennzeichnet, daß die Pulsbreite der Pulssignale für den Wechselrichter dadurch ermittelt wird, daß ein Ausgangsspannungs-Differenzsignal, das die Differenz zwischen der durch die Einrichtung entwickelten Spannung und der gewünschten bzw. Soll-Spannung darstellt, mit einem Rampenspannungssignal verglichen wird, das zu Beginn von jedem Pulssignal zurückgesetzt wird, wobei die Steigung des Rampenspannungssignals nur während der Durchschaltzeit der Schaltmittel zu dem Fehlersignal beiträgt, wodurch die Pulsbreite der Pulssignale für die durchgeschalteten Schaltmittel verkleinert wird.

## Revendications

1. Un système de commande pour éviter la saturation d'une charge inductive dans un système de commande de puissance incorporant un convertisseur (27) pour fournir de la puissance à une charge inductive (28) et un moyen impulsionnel (85) pour fournir des signaux de déclenchement à largeur d'impulsion variable pour le convertisseur, le convertisseur (27) étant du type comprenant des premier et second moyens de commutation ($T_1$, $T_3$) connectés en série entre un bus de tension positif et un bus de tension négatif, des troisième et quatrième moyens de commutation ($T_2$, $T_4$) connectés en série entre les bus de tension positif et négatif, la charge inductive (28) étant montée entre une jonction située entre les premier et second moyens de commutation et une jonction se trouvant entre les troisième et quatrième moyens de commutation, des première et seconde diodes ($D_1$, $D_2$) connectées en série entre les bus de tension positif et négatif et polarisées de manière à conduire le courant entre le bus négatif et le bus positif, des troisième et quatrième diodes ($D_2$, $D_4$) connectées en série entre les bus de tension positif et négatif et polarisées de manière à conduire le courant du bus négatif au bus positif, la charge inductive étant connectée entre une jonction située entre les première et seconde diodes et une jonction placée entre les troisième et quatrième diodes, un détecteur de courant (67) étant monté de manière à détecter le courant traversant la charge et le moyen de commutation et à fournir un signal représentatif de celui-ci, le détecteur étant connecté de façon que le courant traversant les diodes ne soit pas détecté; des moyens (76, 78) pour intégrer le courant dans une première direction à travers la charge lorsque les premier et quatrième moyens de commutation ($T_1$, $T_4$) sont conducteurs et le courant à travers la charge dans une seconde direction lorsque les second et troisième moyens de commutation ($T_2$, $T_3$) sont conducteurs, le moyen d'intégration fournissant un signal d'erreur ayant une polarité et une valeur représentatives d'une différence entre eux;

des moyens (79, 81) pour comparer le signal d'erreur à un signal de référence ayant une valeur prédéterminée pour fournir un signal de déclenchement lorsque la valeur du signal d'erreur est supérieure à la valeur du signal de référence; et

des moyens logiques ($G_1$ à $G_3$) répondant au signal de déclenchement pour appliquer sélectivement le signal d'erreur au moyen impulsionnel (85) et faire varier les signaux impulsionnels de déclenchement appliqués au convertisseur, d'où il résulte que le temps de conduction de la paire de moyens de commutation créant le courant de saturation est réduit afin de diminuer ainsi la valeur du signal d'erreur.

2. Système de commande selon la revendication 1, caractérisé en ce que le moyen de comparaison de signal d'erreur comprend:

un premier comparateur (79) connecté de manière à comparer le signal d'erreur à un signal de référence de valeur positive et à produire le signal de déclenchement lorsque le signal d'erreur est davantage positif que le signal de référence; et

un second comparateur (81) connecté de manière à comparer le signal d'erreur à un signal de référence de valeur négative, le second comparateur fournissant le signal de déclenchement lorsque le signal d'erreur est davantage négatif que le signal de référence.

3. Système de commande selon la revendication 2 caractérisé en ce que le moyen de réponse au signal de déclenchement comprend:

un premier circuit logique (G₂) ayant une première borne d'entrée connectée de manière à recevoir le signal de déclenchement provenant du premier comparateur (79) et une seconde borne d'entrée connectée de façon à recevoir un signal représentatif de la conduction des premier et quatrième moyens de commutation, le premier circuit logique fournissant un premier signal de saturation en réponse à la coïncidence entre le signal de déclenchement et le signal représentatif de la conduction;

un second circuit logique (G₁) ayant une première borne d'entrée connectée de manière à recevoir le signal de déclenchement en provenance du second comparateur (81) et une seconde borne d'entrée connectée de façon à recevoir un signal représentatif de la conduction des second et troisième moyens de commutation, le second circuit logique fournissant un second signal de saturation en réponse à la coïncidence entre le signal de déclenchement et le signal représentatif de la conduction; et

un troisième moyen logique (G₃) répondant à la présence d'au moins l'un des premier et second signaux de saturation pour produire un signal logique afin de permettre l'application du signal d'erreur au moyen impulsionnel.

4. Système de commande selon la revendication 3, caractérisé en ce que la largeur d'impulsion des signaux impulsionnels pour le convertisseur est déterminée en comparant un signal de différence de tension de sortie représentatif de la différence entre la tension développée par le système et la tension désirée à un signal de tension de rampe qui est remis à l'état initial au commencement de chaque signal impulsionnel, la pente du signal de tension de rampe pendant seulement le temps de conduction du moyen de commutation contribuant au signal d'erreur, d'où il résulte que la largeur des impulsions des signaux impulsionnels est réduite pour le moyen de commutation à l'état conducteur.

EP 0 146 876 B1

FIG. 1

FIG.-2 A

FIG. 2 B

EP 0 146 876 B1

EP 0 146 876 B1

4

27

T1  D1  D2  T2

28

67

D3  D4

T3  T4

I SENSER

74

76  77
INTEGRATOR

ERROR
AMPLIFIER

78

REF +
SAT LEVEL  79
SAT T1, T4
COMPARATOR

REF −
SAT LEVEL  81
SAT T2, T3
COMPARATOR

OUT  82
PRECISION
RECTIFIER
−IN  +IN

G1  T2, T3 ON

G3

G2  T1, T4 ON

SYNC  REF
64

SAWTOOTH
COMPENSAT

F1

P.W.M.
TRAIN OF
PULSE

SAWTOOTH

83

73

85

KV ERROR
SIGNAL, ε

FIG.3

T2,T3  T2,T3

T1,T4  T1,T4

FIG. 4 A

ε

T1,T4  T1,T4
T2,T3  T2,T3

X  Y

X < Y

FIG. 4 B